# EUROPÄISCHE PATENTSCHRIFT

(11) **EP 1 716 411 B1**
(45) Veröffentlichungstag und Bekanntmachung des Hinweises auf die Patenterteilung: **14.08.2013**
(21) Anmeldenummer: 05707957.6
(22) Anmeldetag: 07.02.2005
(51) Int. Cl.: G01N 15/06

(54) **VERFAHREN UND VORRICHTUNG ZUR ÜBERWACHUNG DER PARTIKELKONZENTRATION IN EINEM GASSTROM**
METHOD AND DEVICE FOR MONITORING PARTICLE CONCENTRATION IN A GAS STREAM
PROCEDE ET DISPOSITIF POUR SURVEILLER LA CONCENTRATION DE PARTICULES DANS UN FLUX GAZEUX

(30) Priorität: 17.02.2004 DE 102004007634
(43) Veröffentlichungstag der Anmeldung: 02.11.2006
(73) Patentinhaber: Continental Automotive GmbH, 30165 Hannover (DE)
(72) Erfinder: ANTE, Johannes, 93055 Regensburg (DE); HAMMER, Thomas, 91334 Hemhofen (DE); KAPPES, Thomas, 91056 Erlangen (DE)
(86) Internationale Anmeldenummer: PCT/EP2005/050516
(87) Internationale Veröffentlichungsnummer: WO 2005/078423

(56) Entgegenhaltungen:
- DE-A1- 4 420 193
- DE-A1- 10 133 384
- DE-A1- 10 209 755

## Beschreibung

Die Erfindung betrifft ein Verfahren und eine Vorrichtung zur Überwachung der Partikelkonzentration in einem Gasstrom, insbesondere von Rußpartikeln im Abgasstrom eines Verbrennungsmotors.

Die Vorschriften zur Emission von Schadstoffen bei Kraftfahrzeugen werden zunehmend strenger. Maßnahmen zur Reduzierung der Rohemission des Motors durch Optimierung des Verbrennungsprozesses reichen hierbei oft nicht aus. Besonders Dieselmotoren weisen hohe Emissionen von Rußpartikeln auf. Diese können durch motorseitige Maßnahmen nur auf Kosten eines erhöhten Ausstoßes von Stickstoffoxiden reduziert werden. Es bietet sich daher an, die Partikelemission mit Hilfe einer Abgasnachbehandlung zu reduzieren. Moderne Partikelfiltersysteme erreichen hierbei mit einem Abscheidegrad von über 95 % sehr hohe Effizienz.

Auf Grund verschiedener Ursachen kann ein derartiger Rußpartikelfilter fehlerhaft sein oder im Betrieb fehlerhaft werden, so dass er eine erhöhte Rußpartikelmenge passieren lässt. Um eine derartige Fehlfunktion erkennen zu können, ist die Messung der Partikelkonzentration im Gasstrom stromabwärts des Filters erforderlich. Hierzu wird zweckmäßigerweise ein geeigneter Sensor fest in den Abgasstrang eingebaut.

Ein Verfahren zur Bestimmung der Rußkonzentration im Abgas, das sich die elektrische Leitfähigkeit von Rußpartikeln zunutze macht, und ein entsprechender Sensor sind zum Beispiel aus der WO 84/003147 A1 bekannt. Die Partikel werden hier auf einem Träger aus nicht leitendem Material abgeschieden, an dessen Oberfläche zwei metallische Elektroden mit definiertem Abstand aufgebracht sind. Zur Messung der Rußbeladung der Sensoroberfläche wird bei einem Elektrodenabstand von unter 1 mm eine Spannung im Bereich 10V bis 100 V an den Sensor angelegt, und der Strom gemessen, der über die Rußschicht zwischen beiden Elektroden fließt. Nachteilig ist, dass der Sensor eine geringe Empfindlichkeit und hohe Störanfälligkeit bei sehr niedrigen Partikelkonzentrationen aufweist, da zwischen den Elektroden eine durchgängige Rußschicht vorhanden sein muss, damit überhaupt ein Strom fließt. Da die Elektroden dem Abgasstrom und den Rußpartikeln direkt ausgesetzt sind, ist außerdem die Lebensdauer des Sensors wegen Elektrodenerosion begrenzt. Weiterhin ist aus der DE 102 29 411 A1 ein Verfahren zum Bestimmen des Teilchenanteils in einem Gasstrom bekannt, bei dem zwischen zwei Elektroden eines Sensors ein elektrisches Feld angelegt wird, und die Veränderung des Feldes durch die Teilchen erfasst wird. Ein kapazitiver Sensor zur Messung der Ruβkonzentration wird in der DE10209755 beschrieben. Aufgabe der vorliegenden Erfindung ist es, ein Verfahren und eine Vorrichtung zur Überwachung der Partikelkonzentration in einem Gasstrom vorzuschlagen, die hinsichtlich der genannten Nachteile verbessert sind.

Diese Aufgabe wird hinsichtlich des Verfahrens durch Patentanspruch 1 und hinsichtlich der Vorrichtung durch Patentanspruch 4 gelöst.

Das erfindungsgemäße Verfahren sieht vor, dass in einem Gasstrom ein Partikel sammelnder Sensor platziert wird. Der Sensor wird als kapazitives Element in einen elektromagnetischen Resonanzkreis integriert. Der Resonanzkreis wird mit einer wechselspannung erregt. Durch Partikelbeladung des Sensors werden hierbei die kapazitiven bzw. resistiven Eigenschaften des Sensors beeinflusst. Hierdurch ändert sich zumindest eine charakteristische Kenngröße des Resonanzkreises. Diese Kenngröße wird bei unbeladenem Sensor als Referenzwert bestimmt. Anschließend wird die durch Partikelbeladung bedingte Veränderung der Kenngröße gegenüber dem Referenzwert bestimmt.

Da der Sensor im Gasstrom platziert wird, ist er den vom Gasstrom mitgerissenen Partikeln ausgesetzt, weshalb sich je nach Menge der gesamt im Gasstrom vorhandenen Partikel mehr oder weniger viele an ihm anlagern. Die Menge der angelagerten Partikel ist so ein Maß für die gesamt im Gasstrom enthaltenen Partikel, also die Partikelkonzentration.

Der elektromagnetische Resonanzkreis ist beispielsweise ein im Wesentlichen aus einer Kapazität und einer Induktivität aufgebauter Reihenschwingkreis. An der Stelle der Kapazität ist der Sensor in den Resonanzkreis integriert. Das Ersatzschaltbild des Sensors ist hierbei eine Parallelschaltung aus einer Kapazität und einem ohmschen Widerstand, wobei sich die Werte von Kapazität und ohmschem Widerstand durch die Menge der am Sensor angelagerten Partikel verändern. Da die Kenngrößen des Resonanzkreises von den Größen der darin enthaltenen Bauelemente abhängen, ändern sich bei Partikelbeladung des Sensors verschiedene Kenngrößen des gesamten Resonanzkreises, wie zum Beispiel dessen Resonanzfrequenz, Güte oder Gesamtimpedanz. Eine derartige Kenngröße dient somit als Maß für die Partikelbeladung des Sensors.

Bei der Erfindung bedingen schon kleinste Partikelablagerungen am Sensor zunächst kleine Veränderungen der Sensoreigenschaften, also der Werte seines Widerstands oder seiner Kapazität. Durch die Verstärkungswirkung des Resonanzkreises im Resonanzfall bedingen diese jedoch große Veränderungen geeigneter Kenngrößen, z.B. der Resonanzfrequenz oder der Spannungsüberhöhung am Kondensator. Da über diese Kenngrößen die Eigenschaften des Sensors indirekt gemessen werden, ist die Empfindlichkeit des Verfahrens gegenüber einer Widerstandsmessung bei dem bekannten Verfahren signifikant erhöht. Zudem funktioniert das erfindungsgemäße Verfahren auch bei geringsten Sensorbelegungen, wenn noch keine "zusammenhängende" leitfähige Partikelschicht auf dem Sensor vorhanden ist, da sich auch durch kleinste Partikelmengen bereits die kapazitiven Eigenschaften des Sensors ändern, und auch diese Veränderungen vom Verfahren erfassbar sind.

Bei der Erfindung wird der Resonanzkreis mit Wechselspannung fester Frequenz und fester Amplitude erregt und die am Sensor abfallende Spannung wird als Kenngröße bestimmt. Über diese indirekte Messung kann wegen der am Kondensator auftretenden Spannungsüberhöhung die Widerstands- bzw. Kapazitätsänderung des Sensors wesentlich genauer bestimmt werden als über eine direkte Messung ohne Resonanzkreis. Die Frequenz der erregenden Spannung braucht hier nur in etwa im Bereich der Resonanzfrequenz des Resonanzkreises liegen.

Alternativ zu letzterer Vorgehensweise wird bei der Erfindung die Resonanzfrequenz des Resonanzkreises als Kenngröße bestimmt. Dies kann auf verschiedene Weisen erfolgen, z.B. mit Durchwobbeln des in Frage kommenden Frequenzbereiches, Auffinden des Spannungsmaximums am Sensor und Bestimmung der zum Maximum gehörenden Frequenz.

In besonders einfacher Realisierung der Erfindung wird die Frequenz der den Resonanzkreis erregenden Wechselspannung auf die jeweilige Resonanzfrequenz des Resonanzkreise abgestimmt bzw. dieser nachgeführt wird. Die Resonanzfrequenz wird als Kenngröße bestimmt, was in diesem Fall besonders einfach ist, da sie der Frequenz der erregenden Spannung entspricht. Frequenzen können im allgemeinen sehr exakt bestimmt werden, wodurch so eine sehr exakte Bestimmung der beladungsabhängigen Sensoreigenschaften auf indirektem Wege möglich ist. Die Abstimmung der Frequenz der erregenden Spannung auf die Resonanzfrequenz des Resonanzkreises ist ebenfalls sehr einfach durchzuführen, da sich im Resonanzfall die am Sensor abfallende Spannung bei leichter Verstimmung der Frequenz nicht ändert.

Üblicherweise sind in einem Abgasstrom neben Partikeln vielfach weitere Stoffe, etwa Ölrückstände oder hochsiedende Kohlenwasserstoffe, enthalten, die sich am Sensor abscheiden und die Messung stören können. In einer eigenerfinderischen Weiterentwicklung des Verfahrens wird deshalb der Sensor während der Bestimmung der Kenngröße auf eine unterhalb der Zündtemperatur der Partikel liegende Temperatur erwärmt. Ist die Temperatur genügend hoch, werden so am Sensor anhaftende Verunreinigungen entfernt, ohne jedoch Partikel zu verbrennen und so ebenfalls zu entfernen. Wird der Sensor beispielsweise auf eine Temperatur von ca. 200°C gebracht, kann sich kein Kondensat aus Ölrückständen oder hochsiedenden Kohlenwasserstoffen an ihm anlagern und das Messsignal des Sensors stören. Im heißen Zustand des Sensors passieren derartige Stoffe den Sensor, ohne sich an ihm niederzuschlagen. Die am Sensor angelagerten Partikel bleiben jedoch erhalten und deren Konzentration kann weiterhin bestimmt werden.

Wird der Sensor vor einer Bestimmung der Kenngröße auf eine über der Zündtemperatur der Partikel liegende Temperatur erwärmt, ergibt sich eine weitere vorteilhafte Variante des Verfahrens. Die Zündtemperatur der Rußpartikel im Abgas von Dieselmotoren liegt beispielsweise bei etwa 550°C. Die am Sensor anlagernden Partikel verbrennen bei dieser Temperatur und die gesamte Partikelbeladung des Sensors wird somit entfernt. Nach dem Aufheizen des Sensors ist dieser also wieder frei von Partikeln. Somit liefert eine unmittelbar nachfolgende Bestimmung der Kenngröße wieder einen Referenzwert für den unbeladenen Sensor. Da der Referenzwert durch diese Verfahrensvariante jederzeit neu bestimmt werden kann, ist ein Ausgleich von Fertigungstoleranzen des Sensors oder der Veränderungen seiner elektrischen Eigenschaften über die Zeit hinweg möglich.

Eine erfindungsgemäße Vorrichtung zur Durchführung des erfindungsgemäßen Verfahrens umfasst einen im Abgasstrom platzierten Sensor. Dieser ist derart ausgebildet, dass er Partikel aus dem an ihm vorbeiströmenden Gasstrom an sich ansammelt. Er ist als kapazitives Element in einen mit Wechselspannung erregten elektromagnetischen Resonanzkreis integriert. Der Sensor weist einen nicht leitenden Grundkörper aus porösem Material und zwei beabstandet zueinander an ihm angebrachte Elektroden auf. Durch die voneinander isolierten Elektroden bildet sich zwischen diesen eine Kapazität aus, weshalb der Sensor kapazitive Eigenschaften aufweist. Bei Beaufschlagung mit Wechselspannung fließt also Wechselstrom durch den Sensor. Bei Partikelbeladung des Sensors, also Ansammlung von elektrisch leitenden Partikeln auf dem nicht leitenden Körper im elektrischen Feldbereich der Elektroden, ändern sich die elektrischen Wechselspannungseigenschaften des Sensors. Bei Beaufschlagung des Sensors mit Wechselspannung werden z.B. in den Partikeln elektrische Verluste erzeugt, was sich in einem Ansteigen des Verlustwinkels der Sensorkapazität mit zunehmender Partikelbeladung bemerkbar macht. Im Ersatzschaltbild des Sensor aus einer Kapazität mit parallel geschaltetem Widerstand führt dies dazu, dass der Wert des ohmschen Widerstands sinkt.

Aufgrund der Wechselspannungsbeaufschlagung ist hierzu kein durchgehender Gleichstrompfad zwischen den Elektroden notwendig, was einer durchgehenden Rußschicht entspräche. Die Partikel bzw. Partikelschicht braucht auch nicht mit den Elektroden in elektrischem Kontakt zu stehen. Bereits geringe Mengen abgeschiedener Partikel, die keine geschlossene leitfähige Schicht bilden, führen somit zu einer Veränderung der elektrischen Eigenschaften des Sensors. Wie bereits oben erwähnt können diese bei wenigen abgeschiedenen Partikeln sehr kleinen Veränderungen der elektrischen Eigenschaften auf Grund der Integration des Sensors in den Resonanzkreis durch die oben angeführten indirekten Messverfahren als Maß für die im Gasstrom vorhandene Partikelkonzentration sehr genau bestimmt werden.

Aufgrund der Ausführung können im Gegensatz zu einem Grundkörper aus einem Material mit glatter bzw. dichter Oberfläche zu detektierende Partikel wesentlich besser am Sensor anhaften bzw. an und in diesem festgehalten oder gespeichert werden. Durch mehr anhaftende Partikel wird die Empfindlichkeit des Sensors deutlich erhöht.

Der poröse Grundkörper besteht vorzugsweise aus qualitativ hochwertiger Keramik oder Quarzglas. Hierdurch ist gewährleistet, dass der Sensor temperaturstabil und unanfällig ist, um den extremen Umgebungsbedingungen im Abgasstrom eines Verbrennungsmotors standzuhalten. Außerdem verändern so auch geringste Mengen angelagerter Partikel die elektrischen Eigenschaften des Sensors, da die Partikel wesentlich höhere dielektrische Verluste bedingen als der Grundkörper.

Bei der erfindungsgemäßen Vorrichtung ist aufgrund der Integration des Sensors in einen Resonanzkreis - wie oben erwähnt - keine elektrische Gleichstromverbindung zwischen Elektrode und leitfähigen Partikeln bzw. leitfähiger Rußschicht notwendig. Die Elektroden können daher in einer vorteilhaften Ausführungsvariante im Grundkörper eingebettet werden. Die Partikel bzw. die Partikelschicht wird dann kapazitiv an die Elektroden angekoppelt. Durch die Einbettung der Elektroden im Grundkörper sind diese dem Gasstrom nicht direkt ausgesetzt, was deren Lebensdauer deutlich erhöht und sie vor allem im Falle eines Abgasstroms eines Verbrennungsmotors dem aggressiven Abgas nicht ausgesetzt sind.

Eine weitere Möglichkeit, die Elektroden zu schützen besteht darin, diese auf einer für Partikel nicht zugänglichen Seite des Grundkörpers anzuordnen. Dies ist z.B. dadurch zu erreichen, dass der Grundkörper in die Seitenwand des den Gasstrom führenden Rohres eingebettet ist, so dass dessen eine Seite, an der sich Partikel anlagern können in den Gasstrom reicht und die Elektroden an dessen äußerer, nur mit Umgebungsluft in Berührung stehender Seite angeordnet sind, also außerhalb des gasführenden Rohres. Die Elektroden sind auch in diesem Fall gut geschützt und die Herstellung des Sensors ist gegenüber der Einbettung von Elektroden ins Sensormaterial vereinfacht.

Ist der Sensor mit einer Heizvorrichtung ausgerüstet, ergibt sich eine weitere vorteilhafte Ausführungsvariante. So kann er auf leichte Weise auf verschiedene Temperaturen erwärmt werden, um die oben beschriebenen Verfahrensvarianten durchzuführen. Die Heizvorrichtung kann z.B. eine einfache, nicht mit den Elektroden in Berührung stehende elektrische Widerstandsheizwendel sein, die außen oder eingebettet im Sensor angebracht ist.

In einer weiteren vorteilhaften Ausführungsvariante ist der Grundkörper zumindest im von Partikeln erreichbaren Bereich mit einer katalytisch aktiven Schicht versehen. Als Katalysator kommen z.B. Oxide verschiedener Metalle wie Vanadium, Silber, Mangan oder Cer in Frage. Eine derartig katalytisch aktive Schicht setzt z.B. die Zündtemperatur von Rußpartikeln um etwa 150°C auf 400°C herab. Zur Reinigung des Sensors von einer Partikelbeladung durch Erwärmung muss der Sensor deshalb nicht mehr so stark erwärmt werden, was dessen thermische Belastung reduziert und damit seine Lebensdauer verlängert.

Für eine weitere Beschreibung der Erfindung wird auf die Ausführungsbeispiele der Zeichnungen verwiesen. Es zeigen:
- Fig.1: ein Abgasrohr eines Diesel-Verbrennungsmotors mit eingebautem Sensor in einer halbaufgebrochenen Prinzipdarstellung,
- Fig.2: die Draufsicht auf den Sensor aus Fig. 1 in Richtung des Pfeils II,
- Fig.3: das Schaltbild eines Resonanzkreises mit angeschlossenem Sensors aus Fig. 1,
- Fig.4: ein Diagramm für die am Sensor aus Fig. 1 abfallende Spannung in Abhängigkeit von dessen ohmschem Widerstand bei Beschaltung gemäß Fig. 3,
- Fig.5: ein Diagramm der Abweichung der Resonanzfrequenz von der maximalen Resonanzfrequenz des Resonanzkreises nach Fig. 3 über der Widerstandsänderung des Sensors,
- Fig.6: eine alternative Ausführungsform eines Sensors mit eingebetteten Elektroden in einer Darstellung gemäß Fig. 1,
- Fig.7: das Schaltbild eines Resonanzkreises mit angeschlossenem Sensor aus Fig. 6,
- Fig.8: eine alternative Ausführungsform eines Sensors mit an der Gegenseite der Fläche für Partikelanlagerung angebrachten Elektroden in einer Darstellung gemäß Fig. 1,
- Fig.9: eine alternative Ausführungsform eines Sensors mit Grundkörper aus Schaumkeramik in einer Darstellung gemäß Fig. 1,
- Fig.10: das Abgasrohr eines Diesel-Verbrennungsmotors gemäß Fig. 1 mit eingebautem Sensor gemäß Fig. 8 in alternativer Einbaulage in einer Darstellung gemäß Fig. 1,
- Fig.11: die Draufsicht auf den Sensor aus Fig. 10 in Richtung des Pfeils XI, in einer Darstellung gemäß Fig. 2.

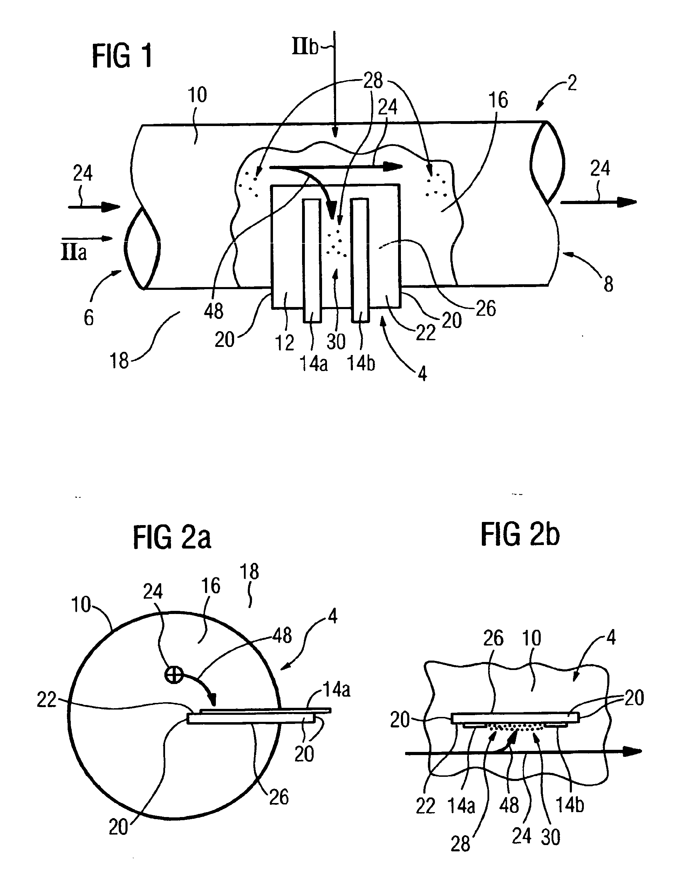

Fig. 1 zeigt einen Ausschnitt aus einem Abgasrohr 2 eines nicht dargestellten Diesel-Verbrennungsmotors. Am Abgasrohr 2 ist ein Sensor 4 montiert. Das Ende 6 des Abgasrohrs 2 führt zunächst zu einem nicht dargestellten Partikelfilter und von dort zum nicht dargestellten Verbrennungsmotor. Vom Ende 8 führt das Abgasrohrs 2 weiter zu einem nicht dargestellten Auspuffende.

In Fig. 1 ist die Wand 10 des Abgasrohrs 2 teilweise aufgebrochen dargestellt und gibt den Blick auf den Sensor 4 frei. Der Sensor 4 umfasst einen Grundkörper 12 und ein auf diesem angebrachtes Elektrodenpaar 14a,b. Der Sensor 4 ist mit seinem Grundkörper 12 derart in die Wand 10 des Abgasrohrs 2 eingefügt, dass er zu einem Teil ins Innere 16 des Abgasrohrs 2 und zum anderen Teil in den das Abgasrohr 2 umgebenden Außenraum 18 weist. Die Wand 10 ist hierbei fest und dicht gegen Abgase mit zwei Seitenflächen 20 und der Vorder- und Rückseite 20 und 26 des Grundkörpers 12 auf einer Umfangslinie verbunden. So liegt die, die Elektroden 14a,b tragende Oberseite 22 des Grundkörpers 12 zu einem Teil im Inneren 16 des Abgasrohrs 2 und steht somit mit Abgas in Verbindung, welches in der durch die Pfeile 24 angedeuteten Richtung das Abgasrohr 2 durchströmt. Es sind auch andere Anordnungen des Sensors 4 am Abgasrohr 2 denkbar, wie weiter unten ausgeführt wird.

In Abgasrichtung 24 vom Abgas mit transportierte Partikel 28 setzen sich zu einem Teil im Bereich 30 der Seite 22 zwischen den Elektroden 14a,b ab. Dies ist durch den Pfeil 48 dargestellt. Der Sensor 4 ist strömungstechnisch günstig so im Gasstrom 24 platziert, dass sich möglichst viele Partikel auf ihm abscheiden. Hierzu dienen z.B. auch nicht dargestellte Leit- oder Umlenkbleche in dessen Umgebung. An den Elektroden 14a,b ist eine jeweils nicht dargestellte elektrische Anschlussleitung angebracht, welche vom Sensor 4 wegführt.

Fig. 2a zeigt den Sensor 4 aus Fig. 1 in Blickrichtung des Pfeils IIa, Fig. 2b die Ansicht in Richtung des Pfeils IIb. Der Sensor 4 steht nur mit seiner Seitenfläche 20 dem in Richtung 24 anströmenden Abgas entgegen und bietet diesem somit möglichst wenig Anströmwiderstand. Die über die Seitenfläche 22 erhabene Elektrode 14a bietet an ihrer Stromabwärts liegenden Seite eine Abrisskante für die Abgasströmung, so dass sich Abgas und somit Partikel im Bereich 30 zwischen den beiden Elektroden 14a,b verwirbeln und anlagern. Bei Anlagerung vieler Partikel 28 im Bereich 30 bildet sich dort eine die Elektroden 14a und 14b leitfähig verbindende Schicht aus. Es entsteht ein elektrischer Gleichstrompfad.

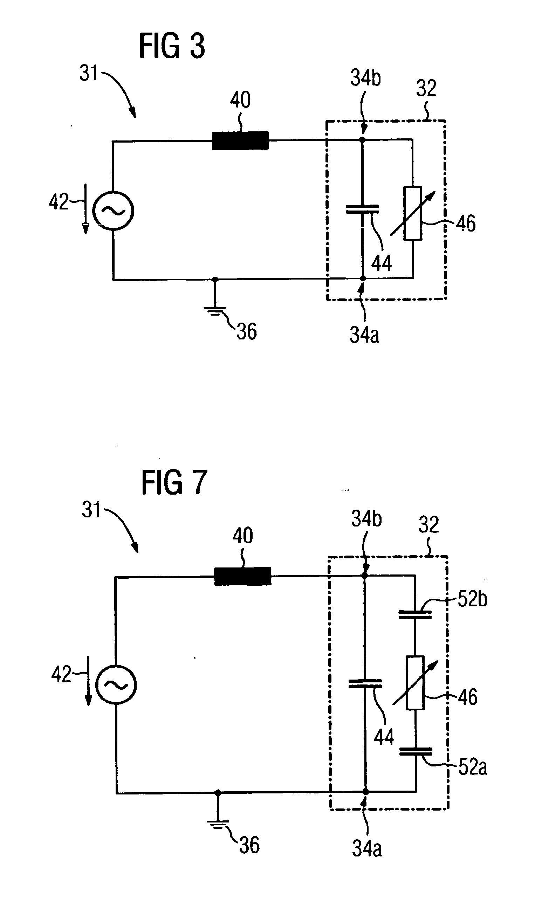

Fig. 3 zeigt das Schaltbild eines Resonanz- oder Schwingkreises, in dem der Sensors 4 nach Fig.1 und 2 betrieben ist. Das Ersatzschaltbild des Sensors 4 entspricht dem umrandeten Schaltungsteil 32. Die Elektrode 14a, welche dem Knoten 34a entspricht, ist mit der Fahrzeugmasse 36 verbunden. Der der Elektrode 14b entsprechende Knoten 34b ist über eine Induktivität 40 mit einer Spannungsquelle 42 für Wechselspannung verbunden, welche wiederum nach Masse 36 geführt ist.

Bei Beaufschlagung mit Wechselspannung enthält das Ersatzschaltbild 32 des Sensors 4 eine Kapazität 44 und einen ohmschen Widerstand 46, die parallel geschaltet sind. Insgesamt stellt Fig. 3 somit einen Reihenschwingkreis dar. Die Werte der Kapazität 44 sowie des Widerstands 46 ändern sich je nach Menge der im Bereich 30 angelagerten Partikel 28. Damit ändern sich auch Kenngrößen des Schwingkreises, wie dessen Eigenfrequenz, Güte oder das Teilerverhältnis für die über dem Schaltungsteil 32 abfallende Spannung zur Spannung der Spannungsquelle 42.

Um quantitative Aussagen über die Partikelbeladung des Sensors 4 treffen zu können, wird zunächst bei noch unbeladenem Sensor 4 zumindest eine dieser betreffenden Kenngrößen, also z.B. nach der ersten Verfahrensvariante die über dem Sensor 4 (und damit am Schaltungsteil 32) abfallende Spannung bestimmt und als Referenzwert abgelegt, z.B. gespeichert. Dies geschieht mit Hilfe einer nicht dargestellten elektronischen Messschaltung, z.B. einem kapazitiven Teiler und Komparatoren. Wird zu einem späterem Zeitpunkt nochmals die selbe Kenngröße, also die Spannung bestimmt, so wird diese mit dem gespeicherten Referenzwert verglichen. Die Abweichung des aktuellen Messwerts der Spannung zum Referenzwert ist dann ein quantitatives Maß für die Menge der auf dem Sensor 4 angelagerten Partikel 28.

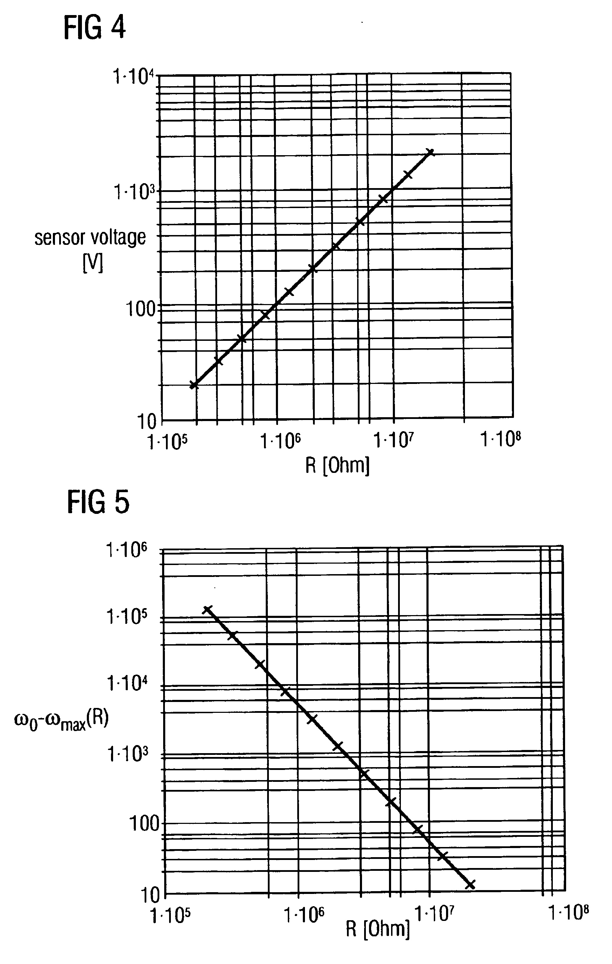

Dem Diagramm in Fig. 4 liegt die Schaltung nach Fig. 3 zugrunde. Die Amplitude der Quellenspannung der Spannungsquelle 42 ist 10 V. Die Impedanz des verlustfreien Kreises (Widerstand 46 ist unendlich groß) beträgt 100 kΩ und die Resonanzfrequenz dann 2 MHz. Im Diagramm ist auf der Abszisse der Wert des Widerstandes 46 im Bereich 100 kΩ bis 100 MΩ aufgetragen. Die Kurve beschreibt die zum jeweiligen Widerstand gehörende Sensorspannung (Ordinate), die über dem Schaltungsteil 32 abfällt und im Bereich von ca. 20 V bis 2000 V liegt. Hierin ist die Eigenschaft der Spannungsüberhöhung des Schwingkreises, nämlich Faktor 2 bis 200 zur erregenden Spannung von 10 V, zu erkennen.

Durch Messung der Spannung am Teilnetzwerk 32, also am Sensor 4, kann mit Hilfe des Diagramms sehr genau auf den Wert des Widerstands 46 zurück geschlossen werden, was wiederum genaue Aussagen über die Menge der Partikel 28 im Bereich 30 und somit über die Menge der im Abgasstrom 24 befindlichen Partikel insgesamt erlaubt.

Das Diagramm in Fig. 5 zeigt wiederum für den gleichen Widerstandsbereich wie in Fig. 4 des Widerstands 46 die Abweichung der Resonanzfrequenz von der Resonanzfrequenz von 2 MHz des verlustfreien Kreises. Bei einem Wert von ca. 800 kΩ des Widerstands 46 beträgt die Abweichung 10 kHz, das heißt, in diesem Fall hat sich die Resonanzfrequenz des gesamten Kreises nach Fig. 3 auf 2,01 MHz erhöht. Aus dem Diagramm nach Fig. 5 kann also durch Messung der Resonanzfrequenz im Schwingkreis sehr genau auf den Widerstandswert zurückgeschlossen werden.

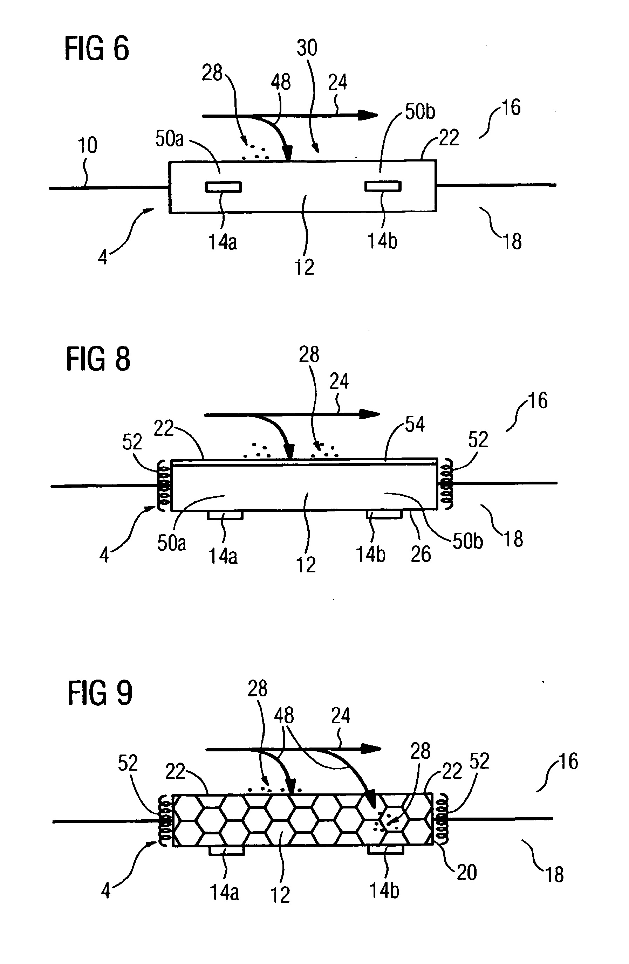

Fig. 6 zeigt einen Sensor 4 im im Abgasrohr 2 eingebauten Zustand entsprechend Fig. 1, wobei vom Abgasrohr 2 nur die Seitenwand 10 im Schnitt sichtbar ist. Im Gegensatz zur Ausführung nach Fig. 1 sind jedoch die Elektroden 14a,b im Inneren des Grundkörpers 12 eingebettet, so dass sie nicht mit dem Innenraum 16 in Kontakt stehen. Dies hat den Vorteil, dass die Elektroden 14a,b nicht dem in Richtung 24 strömendem Abgas ausgesetzt sind, was den Sensor 4 gegenüber der Ausführungsform nach Fig. 1 wesentlich robuster macht. Partikel 28 können sich dennoch in Richtung 48 aus dem Abgasstrom 24 aus der Seite 22 des Sensors 4 niederschlagen.

Obschon die Partikel 28, die bei genügender Dichte auch eine durchgehende leitfähige Schicht auf der Seite 22 ausbilden können, nicht in direkten Kontakt mit den Elektroden 14a,b treten können, beeinflussen die Partikel 28 dennoch die Verlust- bzw. Kapazitätseigenschaften des Sensors 4 bei dessen Beaufschlagung mit Wechselspannung. Da die Elektroden 14a,b im nichtleitenden Grundkörper 12 eingebettet sind, erfolgt die Ankopplung an die die Verluste bestimmenden Partikel 28 kapazitiv in den Bereichen 50a,b.

Gegenüber Fig. 3 ist deshalb das zum Sensor 4 nach Fig. 6 gehörende Ersatzschaltbild 32 in Fig. 7 um zwei Koppelkapazitäten 52a,b ergänzt, welche die Bereiche 50a,b im Ersatzschaltbild 32 repräsentieren. Die Koppelkapazitäten 52a,b sind beidseitig dem Widerstand 46 in Reihe geschaltet und dieser Zweig zur Sensorkapazität 44 parallel geschaltet. Die wieder einen Reihenschwingkreis bildende Beschaltung des Sensors 4 ist in Fig. 7 identisch zu Fig. 3.

Bei geeigneter Dimensionierung der entsprechenden Abmessungen können die entstehenden Koppelkapazitäten 52a,b, so groß gewählt werden, dass sie im Schaltbild nach Fig. 7 vernachlässigbar sind und sich dieses wieder zum Schaltbild nach Fig. 3 vereinfachen lässt. Die Dimensionierung ist einfach zu erreichen, da der Abstand der Sensorelektroden 14a,b zur Seite 22, und damit zur dort entstehenden Partikelschicht stets kleiner gehalten werden kann als der Abstand der Sensorelektroden 14a,b zueinander, und Kapazitäten umgekehrt proportional zu den Abständen der sie bildenden Elektroden sind.

Fig. 8 zeigt eine weitere Ausführungsform für einen Sensor 4, bei dem die Elektroden 14a,b auf der Seite 26, also der dem Außenraum 18 zugewandten Seite des Grundkörpers 12 auf dessen Oberfläche angebracht sind. Bei der Ausführungsform nach Fig. 8 sind die Elektroden 14a,b wie in Fig. 6 nicht dem Innenraum 16 und somit den Abgasen im Abgasrohr 2 ausgesetzt und somit ebenfalls wesentlich weniger Verschleiß unterworfen. Am bzw. in der Nähe des Sensors 4 sind elektrische Widerstands-Heizwendeln 52 angebracht, mit der der Grundkörper 12 insbesondere im Bereich der Seite 22 erhitzt werden kann. Bei geringerer Erhitzung kann somit Sorge getragen werden, dass sich auf der Seite 22 außer den Partikeln 28 keine sonstigen Kondensate niederschlagen, welche die Impedanz des Sensors 4 verfälschen würden. Bei weiterer Erhitzung des Sensors 4 durch die Heizwendel 50 kann außerdem erreicht werden, dass die Partikel 28 ihrerseits verbrennen und die Seite 22 somit wieder partikelfrei gereinigt wird. Hierdurch ist es möglich, den Sensor 4 wieder in einen von Partikeln 28 unbesetzten Zustand zurückzuführen, um eine erneute Referenzmessung durchzuführen. Zur Erleichterung des Abbrennens von Partikels 28 von der Seite 22 des Grundkörpers 12 ist diese mit einer katalytisch aktiven Schicht 54 überzogen, welche die Zündtemperatur der Partikel 28 herabsetzt. Die Seite 22 muss deshalb durch die Heizwendel 52 nicht so stark erhitzt werden, wie ohne katalytische Schicht 54.

Fig. 9 zeigt nochmals den Sensor 4 in einer Ausführungsform ähnlich Fig. 8, wobei dessen Grundkörper 12 nicht aus einem festen, dichten, sondern aus einem porösen Material, wie z.B. Schaumkeramik besteht. Vom Abgasstrom 24 transportierte Partikel 28 können sich deshalb in Richtung des Pfeils 48 nicht nur auf der Oberfläche 22 des Grundkörpers 12, sondern auch in dessen Volumen absetzen. Die Partikel 28 werden so am Grundkörper 12 besser festgehalten und nicht vom Abgasstrom 24 wieder mit fortgerissen. Der Sensor 4 in der Ausführungsform nach Fig. 9 kann deshalb wesentlich mehr Partikel 28 aufnehmen als in den anderen gezeigten Ausführungsformen, wodurch seine elektrischen Eigenschaften stärker veränderbar sind und so die Messgenauigkeit des Gesamtsystems weiter erhöht ist.

Auch für diese Ausführungsform sind Heizwendeln 52 vorgesehen. Die Heizwendeln 52 werden von einer nicht dargestellten separaten Heizspannungsquelle versorgt. Die Heizwendel darf nicht in leitender Verbindung mit den Elektroden 14a,b stehen, um die Messungen im Resonanzkreis nicht zu beeinflussen und muss auch außerhalb des Feldbereiches der Elektroden 14a,b liegen, um die kapazitiven Eigenschaften des Sensors 4 nicht zu stark zu beeinflussen.

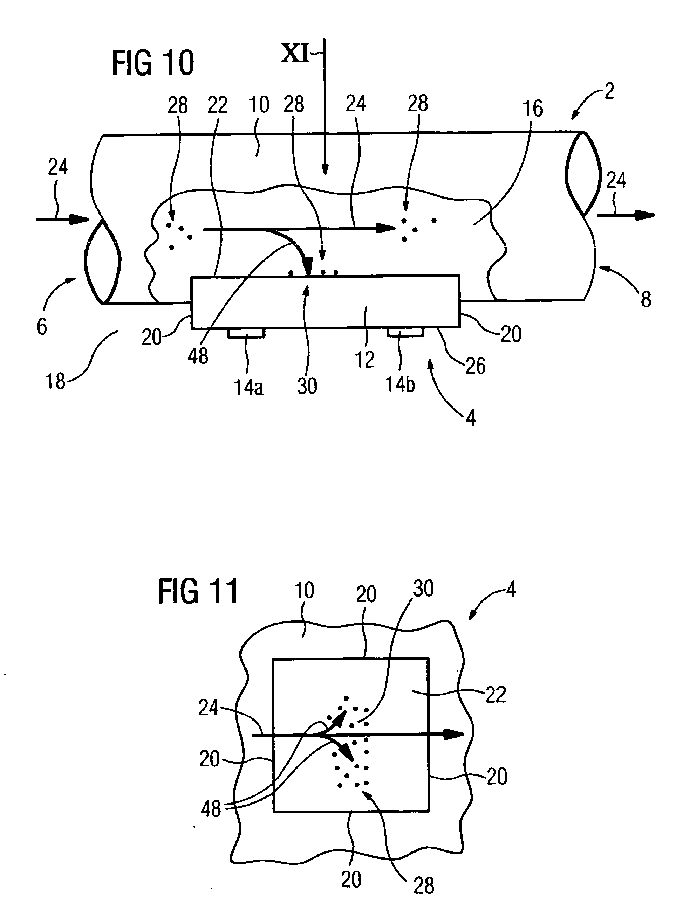

In Fig. 10 ist eine alternative Anordnungsmöglichkeit des Sensors 4 im Abgasrohr 2 gezeigt, die sich für dessen Ausführungsform nach Fig. 8 anbietet. Hier umschließt die Wand 10 die Seitenfläche 20 auf ihrem gesamten Umfang dicht und passgenau. So liegt die Seite 22 des Sensors 4 gänzlich im Rohrinneren 16, und die die Seite 26 zusammen mit den Elektroden 14a,b gänzlich im abgasfreien Außenraum 18.

Fig. 11 zeigt die Ansicht aus Fig. 10 in Richtung des Pfeils XI. Aus dem Innenraum 16 ist also nur die Oberfläche 22 des Sensors erreichbar für Abgase und Partikel 28. Die Elektroden sind im Außenraum 18 so vor den aggressiven Abgasen geschützt.

## Patentansprüche

1. Verfahren zur Überwachung der Partikelkonzentration in einem Gasstrom (24), insbesondere von Rußpartikeln im Abgasstrom eines Verbrennungsmotors, bei dem
a) ein Partikel (28) sammelnder Sensor (4) im Gasstrom (24) platziert wird,
b) der Sensor (4) als kapazitives Element (32) ausgelegt ist
und
c) eine durch Partikelbeladung des Sensors (4) veränderbare Kenngröße bei ünbeladenem Sensor als Referenzwert erfasst und die durch Partikelbeladung bedingte Veränderung der Kenngröße gegenüber dem Referenzwert bestimmt wird **dadurch gekennzeichnet, dass**
d) der Sensor (4) zwei zueinander beabstandet angebrachte Elektroden (14 a, b) aufweist, die auf einem nichtleitenden Grundkörper (12) aus porösem Material angebracht sind und dass der Sensor (4) als kapazitives Element (32) in einen elektromagnetischen Resonanzkreis (31) integriert wird,
e) der Resonanzkreis (31) mit einer Wechselspannung (42) erregt wird und
f) die veränderbare Kenngröße eine Kenngröße des elektromagnetischen Resonanzkreises (31) ist
wobei als Kenngröße
g) entweder die am Sensor (4) abfallende Spannung bestimmt wird, wobei der Resonanzkreis (31) mit Wechselspannung (42) fester Frequenz und fester Amplitude erregt wird oder
h) die Resonanzfrequenz des Resonanzkreises (31) bestimmt wird
und wobei
i) der Sensor (4) während der Bestimmung der Kenngröße auf eine unterhalb der Zündtemperatur der Partikel (28) liegende Temperatur erwärmt wird, um an ihm anhaftende Verunreinigungen zu entfernen.

2. Verfahren nach Anspruch 1, bei dem die Frequenz der den Resonanzkreis (31) erregenden Wechselspannung (42) auf dessen jeweilige Resonanzfrequenz abgestimmt wird, und die Frequenz der erregenden Spannung (42) als Kenngröße bestimmt wird.

3. Verfahren nach Anspruch 1 oder 2, bei dem der Sensor (4) vor einer Bestimmung der Kenngröße auf eine über der Zündtemperatur der Partikel (28) liegende Temperatur erwärmt wird, um eine Partikelbeladung zu entfernen.

4. Vorrichtung zur Durchführung des Verfahrens nach einem der Ansprüche 1 bis 3, mit einem im Abgasstrom (24) platzierbaren, als kapazitives Element (32) in einen mit Wechselspannung (42) erregten elektromagnetischen Resonanzkreis (31) integrierten, Partikel (28) sammelnden Sensor (4) mit zwei zueinander beabstandet angebrachte Elektroden (14a, b)
**dadurch gekennzeichnet, dass**
die Elektroden (14a, b)auf einem nichtleitenden Grundkörper (12) aus porösem Material angebracht sind.

5. Vorrichtung nach Anspruch 4, bei der der Grundkörper (12) aus Keramik besteht.

6. Vorrichtung nach Anspruch 4 oder 5, bei der die Elektroden (14a, b) im Grundkörper (12) eingebettet sind.

7. Vorrichtung nach einem der Ansprüche 4 bis 6, bei dem die Elektroden (14a, b) auf einer für Partikel 828) nicht zugänglichen Seite (26) des Grundkörpers (12) angeordnet sind.

8. Vorrichtung nach einem der Ansprüche 4 bis 7, mit einer Heizvorrichtung (52) für den Sensor (4).

9. Vorrichtung nach einem der Ansprüche 4 bis 8, bei der der Grundkörper (12) mit einer katalytisch aktiven Schicht versehen ist.

## Claims

1. Method for monitoring the particle concentration in a gas stream (24), in particular of soot particles in the exhaust gas stream of an internal combustion engine, in which
a) a sensor (4) which collects particles (28) is placed in the gas stream (24),
b) the sensor (4) is embodied as a capacitive element (32), and
c) a characteristic variable which can vary as a result of the particle load of the sensor (4) is determined as a reference value when the sensor is not loaded and the change in the characteristic variable, which is brought about by the particle load, compared to the reference value is determined,
**characterized in that**
d) the sensor (4) has two electrodes (14a, b) which are mounted spaced apart from one another and are mounted on a non-conductive base body (12) made of porous material, and **in that** the sensor (4) is integrated as a capacitive element (32) into an electromagnetic resonant circuit (31),
e) the resonant circuit (31) is excited with an alternating voltage (42), and
f) the characteristic variable is a characteristic variable of the electromagnetic resonant circuit (31), wherein
g) either the voltage which drops across the sensor (4) is determined as a characteristic variable, the resonant circuit (31) being excited with alternating voltage (42) with a fixed frequency and fixed amplitude or
h) the resonant frequency of the resonant circuit (31) being determined as a characteristic variable
i) and wherein during the determination of the characteristic variable, the sensor (4) is heated to a temperature below the ignition temperature of the particles (28) in order to remove impurities adhering to said sensor (4).

2. Method according to Claim 1, in which the frequency of the alternating voltage (42) exciting the resonant circuit (31) is tuned to its respective resonant frequency, and the frequency of the exciting voltage (42) is determined as a characteristic variable.

3. Method according to Claim 1 or 2, in which, before the characteristic variable is determined, the sensor (4) is heated to a temperature above the ignition temperature of the particles (28) in order to remove a particle load.

4. Device for carrying out the method according to one of Claims 1 to 3, having a sensor (4) which can be placed in the exhaust gas stream (24), is integrated as a capacitive element (32) into an electromagnetic resonant circuit (31) which is excited with alternating voltage (42), and collects particles (28), said sensor (4) having two electrodes (14a, b) which are mounted spaced apart from one another,
**characterized in that**
the electrodes (14a, b) are mounted on a non-conductive base body (12) made of porous material.

5. Device according to Claim 4, in which the base body (12) is composed of ceramic.

6. Device according to Claim 4 or 5, in which the electrodes (14a, b) are embedded in the base body (12).

7. Device according to one of Claims 4 to 6, in which the electrodes (14a, b) are arranged on a side (26) of the base body (12) which is inaccessible to particles (28).

8. Device according to one of Claims 4 to 7, having a heating device (52) for the sensor (4).

9. Device according to one of Claims 4 to 8, in which the base body (12) is provided with a catalytically active layer.

## Revendications

1. Procédé de surveillance de la concentration des particules dans un courant gazeux (24), notamment des particules de suie dans le courant de gaz d'échappement d'un moteur à combustion, dans lequel
a) un capteur (4) recueillant les particules (28) est placé dans le courant gazeux (24),
b) le capteur (4) est conçu comme élément capacitif (32), et
c) un paramètre caractéristique modifiable par le chargement en particules du capteur (4) est prise comme valeur de référence lorsque le capteur n'est pas chargé et la modification du paramètre caractéristique provoquée par le chargement en particules par rapport à la valeur de référence est déterminée,
**caractérisé en ce que**
d) le capteur (4) comprend deux électrodes (14a, b) appliquées de manière à être espacées l'une de l'autre, qui sont appliquées sur un corps de base (12) non conducteur fabriqué à partir d'un matériau poreux, et **en ce que** le capteur (4) est intégré en tant qu'élément capacitif (32) dans un circuit à résonance électromagnétique (31),
e) le circuit à résonance (31) est excité par une tension alternative (42) et
f) le paramètre caractéristique modifiable est un paramètre caractéristique du circuit à résonnance électromagnétique (31),
en tant que paramètre caractéristique,
g) soit la tension chutant au niveau du capteur (4) étant déterminée, le circuit à résonance (31) étant excité par une tension alternative (42) de fréquence fixe et d'amplitude fixe, soit
h) la fréquence de résonance du circuit à résonance (31) étant déterminée,
et
i) le capteur (4) étant porté à une température inférieure à la température d'inflammation des particules (28) pendant la détermination du paramètre caractéristique afin d'éliminer les impuretés adhérant sur celui-ci.

2. Procédé selon la revendication 1, dans lequel la fréquence de la tension alternative (42) excitant le circuit à résonance (31) est adaptée à sa fréquence de résonance respective, et la fréquence de la tension excitatrice (42) est déterminée en tant que paramètre caractéristique.

3. Procédé selon la revendication 1 ou 2, dans lequel le capteur (4) est porté à une température supérieure à la température d'inflammation des particules (28) avant une détermination du paramètre caractéristique afin d'éliminer un chargement en particules.

4. Dispositif de réalisation du procédé selon l'une quelconque des revendications 1 à 3, comprenant un capteur (4) recueillant les particules (28), qui peut être placé dans le courant de gaz d'échappement (24), intégré en tant qu'élément capacitif (32) dans un circuit à résonance électromagnétique (31) excité par une tension alternative (42), comprenant deux électrodes (14a, b) qui sont appliquées de manière à être espacées l'une de l'autre,
**caractérisé en ce que**
les électrodes (14a, b) sont appliquées sur un corps de base (12) non conducteur fabriqué à partir d'un matériau poreux.

5. Dispositif selon la revendication 4, dans lequel le corps de base (12) est en céramique.

6. Dispositif selon la revendication 4 ou 5, dans lequel les électrodes (14a, b) sont incorporées dans le corps de base (12).

7. Dispositif selon l'une quelconque des revendications 4 à 6, dans lequel les électrodes (14a, b) sont agencées sur un côté (26) du corps de base (12) non accessible aux particules (28).

8. Dispositif selon l'une quelconque des revendications 4 à 7, comprenant un dispositif de chauffage (52) pour le capteur (4).

9. Dispositif selon l'une quelconque des revendications 4 à 8, dans lequel le corps de base (12) est muni d'une couche catalytiquement active.
